# FASCICULE DE BREVET EUROPEEN

(11) **EP 1 135 206 B1**
(45) Date de publication et mention de la délivrance du brevet: **25.06.2003**
(21) Numéro de dépôt: 99947585.8
(22) Date de dépôt: 15.10.1999
(51) Int. Cl.: B01J 19/28, C10B 7/04, C10B 47/38, B01J 8/16, F27B 9/24

(54) **PROCEDE DE TRAITEMENT THERMIQUE DE SOLIDES DIVISES, ET DISPOSITIF DE MISE EN OEUVRE DUDIT PROCEDE**
VERFAHREN ZUR WÄRMEBEHANDLUNG VON FEINTEILIGEN FESTSTOFFEN UND VORRICHTUNG ZUR SEINER DURCHFÜHRUNG
METHOD FOR HEAT TREATMENT OF FINELY DIVIDED SOLIDS, AND IMPLEMENTING DEVICE

(30) Priorité: 20.10.1998 FR 9813132
(43) Date de publication de la demande: 26.09.2001
(73) Titulaire: ASSOCIATION GRADIENT, F-60206 Compiègne (FR)
(72) Inventeur: ANTONINI, Gérard, F-75012 Paris (FR); HAZI, Mourad, F-60880 Jaux (FR)
(74) Mandataire: Jaunez, Xavier
(86) Numéro de dépôt international: FR9902512
(87) Numéro de publication internationale: WO00023183

(56) Documents cités:
- DE-B- 1 034 153
- FR-A- 2 354 523
- GB-A- 2 220 149
- US-A- 4 206 186
- US-A- 4 784 603

## Description

La présente invention concerne les traitements thermiques de solides divisés, et plus particulièrement les traitements en continu à moyenne ou haute température.

Les solides divisés concernés peuvent être de types très variés : il peut s'agir par exemple de bois, de paille, de terres contaminées, de sable, de particules métalliques, de béton broyé, ou encore de déchets (déchets industriels tels que des morceaux de caoutchouc, ou ordures ménagères). Les traitements thermiques peuvent être également de différents types, et l'on peut par exemple citer les traitements de séchage, de calcination, de pyrolyse ou toute transformation thermochimique haute température (par exemple carburation, cyanuration). Les gammes de températures concernées sont de l'ordre de 450 à 1100°C pour la plupart des traitements thermiques concernés, et il s'agira en général de traitements de désorption pour la gamme basse de la fourchette précitée, de traitements de pyrolyse pour la gamme centrale de cette fourchette, et de transformation thermochimique des solides pour la gamme haute de ladite fourchette.

Pour la mise en oeuvre de tels traitements thermiques, on a déjà utilisé des procédés dits à lit fixe et des procédés dits à lit fluidisé.

Dans les procédés à lit fixe, la masse de particules solides est en général chauffée par l'intermédiaire d'un balayage par courant gazeux chaud ou en immergeant un serpentin chauffant dans la masse de particules. De tels procédés ont l'avantage d'être simples à mettre en oeuvre, mais la durée des traitements est généralement longue, et ces procédés se prêtent mal à un travail en système ouvert (avec injection et soutirage) en raison des grandes inhomogénéités de traitement rencontrées.

Dans les procédés à lit fluidisé, la masse de particules solides repose sur une grille poreuse, et un courant gazeux soufflé sous la grille provoque la fluidisation de cette masse. Le lit est alors plus détendu, et la percolation facilitée. Ceci permet des coefficients d'échange très supérieurs à ce que l'on obtient avec des procédés à lit fixe. Ces procédés présentent également l'avantage de durées de traitement relativement courtes, et ils se prêtent bien à un travail en système ouvert.

L'invention concerne plus particulièrement un procédé de traitement thermique du type dans lequel on organise le déplacement unidirectionnel progressif et en continu des particules solides dans un tube transporteur selon un lit fluidisé par vibration, et dans lequel on soumet ces particules solides à un traitement thermique à moyenne ou haute température lors de leur déplacement.

Le principe des lits vibro-fluidisés de particules est connu depuis longtemps, et l'on pourra se référer à ce titre aux documents DE-A-1 034 153, US-A-2 143 610, et GB-A-487 106.

Les procédés de traitement thermique décrits dans les documents précités sont en général conçus pour un seul type de solides divisés concernés, et se prêtent mal à des traitements de solides de types différents. En particulier, lorsqu'il s'agit de solides du type bois ou paille ou de déchets, on ne peut éviter la combustion des déchets dans le tube transporteur. En outre, si les solides concernés produisent des fractions condensables telles que des goudrons par suite de leur pyrolyse, on doit faire face à un encrassement rapide des installations utilisées.

L'invention a pour objet de concevoir un procédé et un dispositif de traitement thermique de solides divisés ne présentant pas les inconvénients précités, et dont la conception permet une grande polyvalence d'utilisation quant au type de solides divisés à traiter, et ce avec une gestion optimale de l'énergie concernée.

Il s'agit plus particulièrement d'un procédé de traitement thermique de solides divisés, dans lequel on organise le déplacement unidirectionnel progressif et en continu des particules solides dans un tube transporteur selon un lit fluidisé par vibration et on soumet ces particules solides à un traitement thermique à moyenne ou haute température lors de leur déplacement, le traitement thermique étant réalisé en chauffant par l'extérieur le tube transporteur, et les particules solides se déplaçant sous atmosphère contrôlée dans le tube transporteur chauffé jusqu'à un séparateur chaud, de façon à éviter la condensation des fractions gazeuses condensables produites par les solides lors du traitement thermique, avec au niveau dudit séparateur une évacuation des vapeurs de gaz, et une récupération des résidus solides.

Le chauffage du tube transporteur par l'extérieur peut être réalisé par balayage de fumées chaudes, ou en variante par des moyens de chauffage électriques.

De préférence, le contrôle de l'atmosphère dans le tube transporteur lors du traitement thermique est assuré par un apport de gaz inerte ou réactif dans ledit tube, au-dessus du lit vibro-fluidisé. En particulier, pour les traitements pyrolytiques, le contrôle de l'atmosphère est réglé pour maintenir le taux d'oxygène en-dessous de 2 %.

Dans un mode d'exécution particulier, il est peut être prévu que le procédé comporte, pendant une partie au moins du traitement thermique, la recombustion des gaz récupérés au niveau du séparateur chaud puis leur réinjection dans le circuit de chauffage du tube transporteur.

Pour certains traitements, on pourra prévoir que le déplacement des particules solides dans le tube transporteur s'effectue sous pression contrôlée, positive ou négative selon le cas.

Conformément à une autre caractéristique avantageuse du procédé, on utilise, lors du traitement thermique, un brûleur d'appoint assurant le maintien à une température déterminée des fumées chaudes de balayage chauffant par l'extérieur le tube transporteur, et réalisant l'éventuelle recombustion des gaz récupérés au niveau du séparateur chaud.

De préférence, encore, on règle les paramètres de fonctionnement (débit d'amenée des particules solides, temps de séjour desdites particules dans le tube transporteur, et température de chauffage à l'extérieur dudit tube) au cas par cas en fonction du type concerné de solides divisés. Ces réglages permettent justement une adaptation très souple au type concerné de solides divisés à traiter.

L'invention concerne également un dispositif pour la mise en oeuvre du procédé précité, ledit dispositif comportant :
- un caisson allongé à double enveloppe ;
- au moins un tube transporteur s'étendant de façon rectiligne à l'intérieur du caisson allongé, et se raccordant de façon étanche, en amont à une trémie d'entrée et en aval à un séparateur chaud ;
- un moyen de mise en vibration forcée du ou des tubes transporteurs, agencé pour soumettre les particules solides qui s'y trouvent à un déplacement unidirectionnel progressif et en continu selon un lit fluidisé ;
- un moyen de chauffage, par l'extérieur, du ou des tubes transporteurs.

De préférence, le séparateur chaud est unique, et il est au moins en partie disposé à l'intérieur du caisson allongé à double enveloppe.

Conformément à une autre caractéristique avantageuse, le ou chaque tube transporteur est tenu entre un opercule amont qu'il traverse du caisson allongé et un raccordement du séparateur chaud, l'une au moins des deux liaisons correspondantes étant agencée pour autoriser les variations de longueur dudit tube.

De préférence encore, le dispositif comporte un circuit d'alimentation en gaz inerte ou réactif raccordé au ciel du ou de chaque tube transporteur.

Il est par ailleurs possible de prévoir que le dispositif comporte un brûleur d'appoint agencé pour assurer un balayage extérieur du ou de chaque tube transporteur par des fumées chaudes, et une éventuelle recombustion des gaz récupérés en partie haute du séparateur chaud.

En variante, on pourra prévoir des moyens de chauffage électriques agencés à l'extérieur du ou de chaque tube transporteur, tels qu'une tresse conductrice enroulée ou des coquilles rayonnantes.

Avantageusement encore, le moyen de mise en vibration forcée est constitué par au moins un moteur à balourd dont le régime est réglable pour avoir la fréquence de vibrations désirée dans une plage de fréquences prédéterminée, les vibrations étant transmises au ou à chaque tube transporteur par l'intermédiaire du caisson allongé.

On pourra enfin prévoir que le ou chaque tube transporteur a un axe longitudinal qui est légèrement incliné par rapport à l'horizontale, de façon que le lit vibro-fluidisé de particules solides progresse en montant à l'intérieur dudit tube.

D'autres caractéristiques et avantages de l'invention apparaîtront plus clairement à la lumière de la description qui va suivre, concernant un mode de réalisation particulier, en référence aux figures du dessin annexé, où :
- la figure 1 illustre schématiquement une installation de traitement incluant un dispositif mettant en oeuvre le procédé de l'invention ;
- la figure 2 illustre une variante de l'installation précédente, comportant deux tubes transporteurs pour l'acheminement des particules solides jusqu'à un séparateur commun.

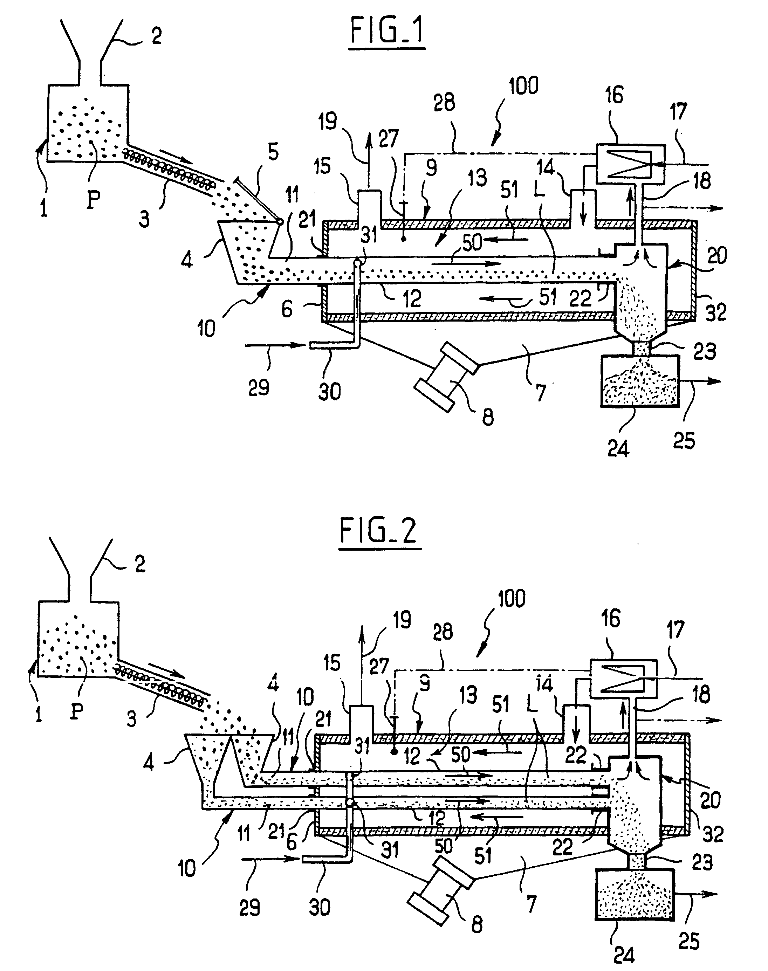

La figure 1 illustre schématiquement une installation 100 de traitement thermique permettant de traiter en continu des particules solides, en les soumettant, au cours de leur déplacement, à un traitement thermique à moyenne ou haute température. Il pourra naturellement s'agir de solides divisés de types très divers, tels par exemple que ceux qui ont déjà été mentionnés plus haut dans l'introduction de la description.

L'installation de traitement 100 comporte un doseur pondéral 1 formant un réservoir de stockage de particules solides à traiter P qui ont été déversées par une trémie supérieure 2, les particules étant délivrées avec un débit constant au moyen par exemple d'un organe de sortie à vis hélicoïdale 3. Les particules solides se déversent alors dans une goulotte ou trémie d'alimentation 4, ici équipée d'un couvercle articulé 5 pour parfaire l'étanchéité (ce qui est intéressant lorsque le traitement thermique est mis en oeuvre sous pression contrôlée, positive ou négative, selon le cas), et dont l'espace intérieur se raccorde inférieurement à l'entrée d'un tube transporteur 10. La partie amont de ce tube 10 est notée 11, et cette partie amont passe dans une plaque 6 qui constitue un opercule amont pour un caisson allongé 9 à double enveloppe, caisson dont l'extrémité aval est fermée par un autre opercule 32. Pour les versions sous pression, on pourra intercaler, en amont de l'opercule 6, un système (non représenté) assurant une étanchéité plus poussée, par exemple un sas à écluse.

Le tube transporteur 10, ici unique, s'étend de façon rectiligne à l'intérieur du caisson allongé 9, et se raccorde de façon étanche, en amont à la trémie d'alimentation 4 par sa portion 11 (éventuellement par l'intermédiaire d'un raccord souple découpleur de vibrations), et en aval à un séparateur chaud 20. La partie du tube transporteur 10 qui est à l'intérieur du caisson allongé 9 est notée 12, et cette partie 12 est donc rectiligne. L'extrémité amont de cette partie 12 correspond à la traversée de l'opercule 6, au moyen d'un raccordement 21, tandis que son extrémité aval passe dans un raccordement noté 22 du séparateur chaud 20. Le tube transporteur 10 est ainsi tenu entre l'opercule amont 6 qu'il traverse du caisson allongé 9 et le raccordement 22 du séparateur 20, et l'une au moins des deux liaisons correspondantes 21, 22 (par exemple la liaison 22 alors prévue pour permettre un coulissement longitudinal) est ici agencée pour autoriser les variations de longueur du tube par suite des changements de températures. Le raccordement des deux extrémités de la portion tubulaire 12 est cependant essentiellement étanche (l'étanchéité amont étant obtenue de façon naturelle par le produit présent dans la trémie d'alimentation), ce qui permet d'organiser, à l'intérieur de cette portion tubulaire, non seulement une atmosphère contrôlée au-dessus des particules solides qui se déplacent à l'intérieur du tube 10, mais aussi une pression contrôlée (négative pour les traitements de désorption, ou positive pour les traitements de pyrolyse).

Dans le procédé de l'invention, on organise le déplacement unidirectionnel progressif et en continu des particules solides selon un lit L fluidisé par vibration, ou "lit vibro-fluidisé", et on soumet ces particules solides à un traitement thermique à moyenne ou haute température lors de leur déplacement. On combine ainsi de façon avantageuse et performante une technique de transport vibrant de matériaux particulaires et une technique de traitement thermique à moyenne ou haute température.

On a représenté de façon schématique les moyens qui permettent de mettre en vibration forcée le tube transporteur 10. On utilise à cet effet un châssis vibrant noté 7 sur lequel est monté le caisson 9, châssis en partie inférieure duquel sont disposés deux moteurs à balourd 8. On n'a pas représenté ici le tablier ou berceau qui sera en général utilisé pour monter un tel châssis vibrant 7 sur le sol, par l'intermédiaire de patins amortisseurs de type classique. Le moteur à balourd 8, dont l'axe incliné permet d'avoir des composantes d'accélération horizontale et verticale induisant à la fois un mélange des particules solides dans une direction transversale à l'axe du tube transporteur 10, et une propagation en continu des particules dans la direction de l'axe du tube transporteur, avec un avancement à une même vitesse pour toutes les particules quelle que soit leur granulométrie, ce qui produit un écoulement de type "piston" qui est optimal.

Il sera de préférence prévu de pouvoir régler le régime des moteurs à balourd 8 de façon à caler la fréquence des vibrations à une valeur correspondant au temps de séjour désiré. Il suffit en effet, pour régler le temps de séjour des particules solides dans le tube transporteur 10, de faire varier la fréquence des vibrations, le débit massique des particules restant quant à lui essentiellement inchangé. A titre indicatif, on pourra utiliser des vibrations dont la fréquence est de l'ordre de 10 à 30 Hertz, avec des amplitudes de quelques millimètres. Si l'on augmente la fréquence de vibration, le lit vibro-fluidisé de particules se déplace plus vite à l'intérieur du tube transporteur, de sorte que l'épaisseur du lit diminue car le débit des particules reste imposé à une valeur constante par le dispositif externe d'alimentation utilisé. Le temps de séjour est alors diminué. A l'inverse, une diminution de la fréquence aura pour effet d'augmenter le temps de séjour des particules.

Bien que cela ne soit pas représenté ici, on pourra prévoir que l'axe longitudinal du tube transporteur 10 soit légèrement incliné par rapport à l'horizontale, de façon que le lit vibro-fluidisé de particules solides progresse en montant à l'intérieur du tube. L'angle d'inclinaison sera de préférence choisi de l'ordre de quelques degrés seulement, et il sera alors avantageux d'agencer le berceau de support du dispositif de telle façon qu'un réglage d'inclinaison soit possible. On s'arrangera aussi pour avoir la possibilité de maintenir la verticalité du séparateur chaud 20 malgré l'inclinaison du caisson à double enveloppe 9.

En l'espèce, la portion 12 du tube transporteur 10 est en totalité entourée par l'espace intérieur noté 13 du caisson 9, dans lequel est organisé une circulation de fumées chaudes, symbolisées par les flèches 51, la progression des particules à l'intérieur du tube transporteur 10 étant quant à elle symbolisée par la flèche 50. Ces fumées chaudes viennent balayer la surface extérieure du tube transporteur 10, et on constate ici que le balayage de fumées chaudes est organisé à contre-courant par rapport au sens de déplacement des particules solides dans le tube transporteur 10.

On pourra prévoir, en variante, un chauffage électrique direct, par l'extérieur, du tube transporteur 10, par exemple en enroulant une tresse conductrice autour de ce tube, ou par des coquilles rayonnantes agencées autour et à l'extérieur du tube (ces coquilles n'étant de préférence pas mises en vibration lors du fonctionnement). Cependant, une telle solution pourra s'avérer plus onéreuse que la solution présentement illustrée utilisant un balayage par des fumées chaudes.

Pour le chauffage de l'extérieur du tube transporteur 10, on a donc ici prévu un balayage par des fumées chaudes qui proviennent d'un brûleur 16 au gaz ou au fioul. On a représenté ici schématiquement un tel brûleur, avec son arrivée d'air 17 et son arrivée de gaz 18, les fumées chaudes rentrant dans le caisson 9 par une entrée associée 14, après quoi ces fumées se propagent à l'intérieur du caisson 9 à contre-courant comme schématisé par les flèches 51, pour finalement ressortir par une sortie notée 15 comme schématisé par la flèche 19.

Le brûleur 16, qui est un brûleur d'appoint facilite l'initiation du processus de traitement thermique et il permet ensuite d'assurer le maintien de la température désirée dans l'espace intérieur 13 du caisson 9. On pourra à ce titre prévoir de disposer une sonde de température 27 pénétrant dans l'espace 13, sonde dont le signal est transmis par une ligne 28 à un organe électronique associé de régulation équipant le brûleur d'appoint 16. Ces moyens permettent d'avoir à tout moment la température précise désirée θ dans l'espace intérieur 13.

On peut ainsi régler tous les paramètres de fonctionnement au cas par cas en fonction du type concerné de solides divisés : il s'agira du débit d'amenée D des particules solides (réglé avec précision par la vis d'amenée 3), du temps de séjour T desdites particules dans le tube transporteur 10 (réglé par le choix de la valeur des fréquences de vibrations donnée par les moteurs à balourd 8), et la température de chauffage θ à l'extérieur du tube transporteur 10 (réglée par le brûleur d'appoint 16 et son mécanisme de régulation). Le réglage de la pressior (positive ou négative) pourra également être prévu. Cette triple ou quadruple possibilité de réglage des paramètres confère au dispositif de l'invention une très grande souplesse qui permet une véritable utilisation polyvalente de l'installation en vue d'un traitement de solides de types très divers.

Il convient de revenir sur la présence d'ur composant particulièrement important dans le cadre du procédé et du dispositif de l'invention, à savoir le séparateur chaud 20, qui est par exemple de type cyclone.

En effet, non seulement les liaisons aux deux extrémités de la portion tubulaire 12 sont étanches, ce qui permet un excellent contrôle de l'atmosphère en ciel de tube et aussi éventuellement de la pression, mais en plus il est prévu que le séparateur 20 soit "chaud" : ceci signifie que l'enveloppe de ce séparateur, au moins dans la partie haute de celle-ci, est suffisamment chaude pour éviter toute condensation indésirable des fractions gazeuses condensables. Ainsi, un tel agencement de la portion rectiligne tubulaire 12 et du séparateur chaud 20 qui y est connecté permet d'éviter à la fois la combustion des particules solides et la condensation des fractions gazeuses condensables produites par les solides lors du traitement thermique.

Le contrôle de l'atmosphère dans le tube transporteur 10 lors du traitement thermique peut être assuré par un apport de gaz inerte ou réactif dans ledit tube, au-dessus du lit de solides divisés vibro-fluidisé L, ce contrôle de l'atmosphère étant de préférence réglé par un dispositif d'alimentation externe. En particulier, pour les traitements pyrolytiques, on cherchera à maintenir le taux d'oxygène en-dessous de 2 %. En l'espèce on a prévu un circuit 30 d'alimentation en gaz inerte (azote, gaz carbonique) ou en gaz réactif, sous pression ou non, raccordé en 31 au ciel du tube transporteur 10. L'arrivée de gaz inerte ou réactif est schématisée par la flèche 29.

Pour éviter la condensation des fractions gazeuses condensables produites lors du traitement thermique, il est donc indispensable de prévoir que le séparateur 20 soit chaud. Si le séparateur 20 est agencé à l'extérieur du caisson à double enveloppe 9 (variante non illustrée ici), il convient alors d'organiser des moyens de chauffage périphériques spécialement consacrés au maintien de l'enveloppe du séparateur à la température adéquate. Il est toutefois intéressant de prévoir, comme cela est illustré sur la figure 1, que le séparateur chaud 20 soit au moins en partie disposé dans le caisson allongé 9 à double enveloppe : on peut en particulier prévoir que seule la partie haute du séparateur chaud 20 soit disposée à l'intérieur du caisson 9 à double enveloppe, en effet cette partie haute est spécifiquement concernée par l'arrivée des fractions gazeuses dont on veut éviter précisément la condensation. La partie inférieure du même séparateur 20 peut être exposée à la température ambiante, dans la mesure où elle sert à collecter, essentiellement par gravité, les résidus de solides qui tombent alors dans un sas 23 (éventuellement inerté et refroidi) pour déboucher dans un conteneur 24. De là, les résidus peuvent être évacués, comme schématisé par la flèche 25, par un extracteur non représenté ici, par exemple vers un gazéifieur.

On pourra par ailleurs prévoir que le procédé de traitement comporte, pendant une partie au moins du traitement thermique, la recombustion des gaz récupérés en partie haute du séparateur chaud 20, puis leur réinjection dans le circuit de chauffage de l'enveloppe du tube transporteur 10. C'est ce que l'on a illustré ici avec la tubulure 18 qui raccorde le toit du séparateur chaud 20 au brûleur d'appoint 16. On obtient alors une gestion énergétique optimale grâce à la chaleur récupérée qui est ramenée à l'intérieur du caisson 9, et qui participe donc au balayage de la surface extérieure du tube transporteur 10.

Les moyens de chauffage précités permettent ainsi non seulement la mise en régime en température de l'installation pendant une phase de préchauffage, mais aussi une recombustion des gaz de désorption ou de pyrolyse qui sont émis, permettant ainsi de bénéficier de leur contenu énergétique, grâce à une post-combustion intégrée. Ainsi, le brûleur d'appoint 16 assure le maintien à une température déterminée des fumées chaudes de balayage chauffant par l'extérieur le tube transporteur 10, et il réalise l'éventuelle recombustion des gaz récupérés en partie haute du séparateur chaud 20.

La figure 2 décrit une installation 100 qui est une variante de celle illustrée en figure 1, variante dans laquelle le dispositif comporte deux tubes transporteurs 10 superposés passant à l'intérieur du même caisson allongé 9. On a par suite deux trémies d'entrée séparées 4, deux portions amont 11 de tube, deux portions rectilignes 12 traversant le caisson à double enveloppe 9, et deux raccordements 22 (éventuellement coulissants) prévus sur le séparateur chaud 20, qui est alors commun aux deux tubes transporteurs 10. Le circuit 30 servant à alimenter le ciel des tubes 12 en gaz inerte ou réactif présente à cet effet deux piquages 31 associés à chacun desdits tubes. Pour le reste, le fonctionnement est exactement identique à celui de l'installation qui vient d'être décrite en détail à la figure 1.

L'installation de la figure 2 permet de faire comprendre que l'on peut utiliser plusieurs tubes transporteurs intégrés dans l'espace intérieur d'un même caisson à double enveloppe, et associés à un séparateur chaud commun disposé au moins en partie dans ledit caisson. D'une façon générale, qu'il y ait un ou plusieurs tubes transporteurs, on pourra choisir ad libitum la section de chacun des tubes transporteurs, dont la forme pourra être circulaire dans le cas de tubes cylindriques, ou encore rectangulaire dans le cas de tubes plats.

Dans le cas de plusieurs tubes transporteurs, il pourra être avantageux de prévoir à l'intérieur du caisson des chicanes pour augmenter le trajet des fumées, conformément à une technologie bien connue, ainsi que des matériaux réfractaires à l'intérieur de l'enveloppe du caisson.

Le ou les tubes transporteurs 10 pourront être réalisés en matériau céramique ou en acier réfractaire. Il apparaît intéressant d'utiliser un matériau tel que le carbure de silicium, car ce matériau tient aisément à des températures atteignant 1600°C, et présente un très faible coefficient de dilatation linéique ainsi qu'une bonne résistance à la corrosion.

L'invention n'est pas limitée aux modes d'exécution qui viennent d'être décrits, mais englobe au contraire toute variante reprenant, avec des moyens équivalents, les caractéristiques essentielles énoncées plus haut.

## Revendications

1. Procédé de traitement thermique de solides divisés, dans lequel on organise le déplacement unidirectionnel progressif et en continu des particules solides dans un tube transporteur (10) selon un lit (L) fluidisé par vibration et on soumet ces particules solides à un traitement thermique à moyenne ou haute température lors de leur déplacement, **caractérisé en ce que** le traitement thermique est réalisé en chauffant par l'extérieur le tube transporteur (10), et **en ce que** les particules solides se déplacent sous atmosphère contrôlée dans le tube transporteur chauffé (10) jusqu'à un séparateur chaud (20), de façon à éviter la condensation des fractions gazeuses condensables produites par les solides lors du traitement thermique, avec au niveau dudit séparateur une évacuation des vapeurs de gaz, et une récupération des résidus solides.

2. Procédé selon la revendication 1, **caractérisé en ce que** le chauffage du tube transporteur (10) est réalisé par balayage de fumées chaudes.

3. Procédé selon la revendication 1, **caractérisé en ce que** le chauffage du tube transporteur (10) est réalisé par des moyens de chauffage électriques agencés à l'extérieur dudit tube.

4. Procédé selon l'une des revendications 1 à 3, **caractérisé en ce que** le contrôle de l'atmosphère dans le tube transporteur (10) lors du traitement thermique est assuré par un apport de gaz inerte ou réactif dans ledit tube, au-dessus du lit vibro-fluidisé (L).

5. Procédé selon la revendication 4, **caractérisé en ce que**, pour les traitements pyrolytiques, le contrôle de l'atmosphère est réglé pour maintenir le taux d'oxygène en-dessous de 2 %.

6. Procédé selon l'une des revendications 1 à 5, **caractérisé en ce que** le déplacement des particules solides dans le tube transporteur (10) s'effectue sous pression contrôlée, positive ou négative selon le cas.

7. Procédé selon l'une des revendications 1 à 6, **caractérisé en ce qu'**il comporte, pendant une partie au moins du traitement thermique, la recombustion des gaz récupérés au niveau du séparateur chaud (20) puis leur réinjection dans le circuit de chauffage du tube transporteur (10).

8. Procédé selon la revendication 2 ou la revendication 7, **caractérisé en ce qu'**on utilise, lors du traitement thermique, un brûleur d'appoint (16) assurant le maintien à une température déterminée des fumées chaudes de balayage chauffant par l'extérieur le tube transporteur (10), et réalisant l'éventuelle recombustion des gaz récupérés au niveau du séparateur chaud (20).

9. Procédé selon l'une des revendications 1 à 8, **caractérisé en ce que** l'on règle les paramètres de fonctionnement tels que débit d'amenée des particules solides, temps de séjour desdites particules dans le tube transporteur, et température de chauffage à l'extérieur dudit tube, au cas par cas en fonction du type concerné de solides divisés.

10. Dispositif (100) pour la mise en oeuvre d'un procédé de traitement thermique de solides divisés selon l'une au moins des revendications 1 à 9, **caractérisé en ce qu'**il comporte :
- un caisson allongé (9) à double enveloppe ;
- au moins un tube transporteur (10) s'étendant de façon rectiligne à l'intérieur du caisson allongé (9), et se raccordant de façon étanche, en amont à une trémie d'entrée (4) et en aval à un séparateur chaud (20) ;
- un moyen (8) de mise en vibration forcée du ou des tubes transporteurs (10), agencé pour soumettre les particules solides qui s'y trouvent à un déplacement unidirectionnel progressif et en continu selon un lit fluidisé (L) ;
- un moyen (16) de chauffage, par l'extérieur, du ou des tubes transporteurs (10).

11. Dispositif selon la revendication 10, **caractérisé en ce que** le séparateur chaud (20) est unique, et il est au moins en partie disposé à l'intérieur du caisson allongé à double enveloppe (9).

12. Dispositif selon la revendication 10 ou la revendication 11, **caractérisé en ce que** le ou chaque tube transporteur (10) est tenu entre un opercule amont (6) qu'il traverse du caisson allongé (9) et un raccordement (22) du séparateur chaud (20), l'une au moins des deux liaisons correspondantes (21, 22) étant agencée pour autoriser les variations de longueur dudit tube.

13. Dispositif selon l'une des revendications 10 à 12, **caractérisé en ce qu'**il comporte un circuit (30) d'alimentation en gaz inerte ou réactif raccordé au ciel du ou de chaque tube transporteur (10).

14. Dispositif selon l'une des revendications 10 à 13, **caractérisé en ce qu'**il comporte un brûleur d'appoint (16) agencé pour assurer un balayage extérieur du ou de chaque tube transporteur (10) par des fumées chaudes, et une éventuelle recombustion des gaz récupérés en partie haute du séparateur chaud (20).

15. Dispositif selon l'une des revendications 10 à 13, **caractérisé en ce qu'**il comporte des moyens de chauffage électriques agencés à l'extérieur du ou de chaque tube transporteur, tels qu'une tresse conductrice enroulée ou des coquilles rayonnantes.

16. Dispositif selon l'une des revendications 10 à 15, **caractérisé en ce que** le moyen de mise en vibration forcée est constitué par au moins un moteur à balourd (8) dont le régime est réglable pour avoir la fréquence de vibrations désirée dans une plage de fréquences prédéterminée, les vibrations étant transmises au ou à chaque tube transporteur (10) par l'intermédiaire du caisson allongé (9).

17. Dispositif selon l'une des revendications 10 à 16, **caractérisé en ce que** le ou chaque tube transporteur (10) a un axe longitudinal qui est légèrement incliné par rapport à l'horizontale, de façon que le lit vibro-fluidisé (L) de particules solides progresse en montant à l'intérieur dudit tube.

## Claims

1. A method of heat treating divided solids in which solid particles in a vibration-fluidized bed (L) are caused to travel progressively and continuously in one direction along a transporter tube (10), and said solid particles are subjected to medium or high temperature heat treatment during their travel, the method being **characterized in that** the heat treatment is implemented by heating the transporter tube (10) from the outside, and **in that** the solid particles travel in a controlled atmosphere along the heated transporter tube (10) to a hot separator (20) so as to avoid condensation of condensable gaseous fractions produced by the solids during the heat treatment, with gas vapor being exhausted and solid residues being recovered at said separator.

2. A method according to claim 1, **characterized in that** the transporter tube (10) is heated by being swept with hot flue gases.

3. A method according to claim 1, **characterized in that** the transporter tube (10) is heated by electric heater means arranged outside said tube.

4. A method according to any one of claims 1 to 3, **characterized in that** the atmosphere in the transporter tube (10) during heat treatment is controlled by delivering inert or reactive gas into said tube over the vibration-fluidized bed (L).

5. A method according to claim 4, **characterized in that** for pyrolytic treatments, the control of the atmosphere is adjusted so as to keep the oxygen content below 2%.

6. A method according to any one of claims 1 to 5, **characterized in that** the solid particles are caused to travel in the transporter tube (10) under controlled pressure, which pressure is positive or negative as appropriate.

7. A method according to any one of claims 1 to 6, **characterized in that** during at least a portion of the heat treatment it includes recombustion of the gases recovered at the hot separator (20) followed by reinjecting them into the heater circuit of the transporter tube (10).

8. A method according to claim 2 or claim 7, **characterized in that** during the heat treatment, an auxiliary burner (16) is used to maintain the flow of flue gases heating the outside of the transporter tube (10) at a determined temperature, possibly by implementing recombustion of the gas recovered at the hot separator (20).

9. A method according to any one of claims 1 to 8, **characterized in that** operating parameters such as solid particle feed rate, transit time of said the particles in the transporter tube, and the temperature to which the outside of said tube is heated are adjusted on a case-by-case basis as a function of the type of divided solid concerned.

10. Apparatus (100) for implementing a method of heat treatment divided solids according to at least one of claims 1 to 9, the apparatus being **characterized in that** it comprises:
· an elongate, double-walled vessel (9);
· at least one transporter tube (10) extending in rectilinear manner inside the elongate vessel (9) and connected in leaktight manner at an upstream end to an inlet hopper (4) and at a downstream end to a hot separator (20);
· means (8) for imparting forced vibration to the transporter tube(s) (10), said means being arranged to subject the solid particles that are to be found therein to progressive and continuous one-way travel as a fluidized bed (L); and
· means (16) for heating the transporter tube(s) (10) from the outside.

11. Apparatus according to claim 10, **characterized in that** the hot separator (20) is a single item and is disposed at least in part inside the elongate, double-walled vessel (9).

12. Apparatus according to claim 10 or claim 11, **characterized in that** the or each transporter tube (10) is held between an upstream wall (6) of the elongate vessel (9) through which it passes, and a coupling (22) to the hot separator (20), at least one of the two corresponding connections (21, 22) being arranged to accommodate variations in the length of said tube.

13. Apparatus according to any one of claims 10 to 12, **characterized in that** it includes a circuit (30) for feeding inert or reactive gas, said circuit being connected to the roof of the or each transporter tube (10).

14. Apparatus according to any one of claims 10 to 13, **characterized in that** it includes an auxiliary burner (16) arranged to ensure that the outside of the or each transporter tube (10) is swept with hot flue gases, associated with optional recombustion of gas recovered from the top of the hot separator (20).

15. Apparatus according to any one of claims 10 to 13, **characterized in that** it includes electrical heater means arranged outside the or each transporter tube, such as a winding of conductive braid or radiating shells.

16. Apparatus according to any one of claims 10 to 15, **characterized in that** the means for imparting forced vibration are constituted by at least one unbalanced motor (8) of speed adjustable to obtain a desired frequency of vibration in a predetermined range of frequencies, the vibration being transmitted to the or each transporter tube (10) via the elongate vessel (9).

17. Apparatus according to any one of claims 10 to 16, **characterized in that** the or each transporter tube (10) has a longitudinal axis which is slightly inclined relative to the horizontal so that the vibration-fluidized bed (L) of solid particles advances while moving upwards inside said tube.

## Patentansprüche

1. Verfahren zur Wärmebehandlung von feinteiligen Feststoffen, bei dem man die fortschreitende und kontinuierliche Bewegung von festen Teilchen in einem Förderrohr (10) in einer Richtung entlang einem Vibrationsfließbett (L) veranlaßt und man diese festen Teilchen während ihrer Bewegung einer Wärmebehandlung bei mittlerer oder hoher Temperatur aussetzt, **dadurch gekennzeichnet, daß** die Wärmebehandlung dadurch erfolgt, daß man das Förderrohr (10) von außen erwärmt, und daß sich die festen Teilchen unter kontrollierter Atmosphäre in dem erwärmten Förderrohr (10) bis zu einem Heißabscheider (20) derart bewegen, daß die Kondensation der kondensierbaren, von den Feststoffen während der Wärmebehandlung erzeugten gasförmigen Fraktionen vermieden wird, mit einem Abzug der Gasdämpfe im Bereich des Heißabscheiders und einer Rückgewinnung der Feststoffrückstände.

2. Verfahren nach Anspruch 1, **dadurch gekennzeichnet, daß** die Erwärmung des Förderrohres (10) durch Spülen mit Heißrauch erfolgt.

3. Verfahren nach Anspruch 1, **dadurch gekennzeichnet, daß** die Erwärmung des Förderrohres (10) durch elektrische Heizmittel erfolgt, die außerhalb des genannten Rohres angeordnet sind.

4. Verfahren nach einem der Ansprüche 1 bis 3, **dadurch gekennzeichnet, daß** die Kontrolle der Atmosphäre in dem Förderrohr (10) während der Wärmebehandlung durch eine Zufuhr von Inert- oder Reaktionsgas in das genannte Rohr über dem Vibrationsfließbett (L) sichergestellt wird.

5. Verfahren nach Anspruch 4, **dadurch gekennzeichnet, daß** für die pyrolytischen Behandlungen die Kontrolle der Atmosphäre geregelt wird, um den Sauerstoffanteil unter 2% zu halten.

6. Verfahren nach einem der Ansprüche 1 bis 5, **dadurch gekennzeichnet, daß** die Bewegung der festen Teilchen in dem Förderrohr (10) unter geregeltem Druck erfolgt, je nach Fall positiver oder negativer Druck.

7. Verfahren nach einem der Ansprüche 1 bis 6, **dadurch gekennzeichnet, daß** es wenigstens während eines Teils der Wärmebehandlung die Wiederverbrennung der im Bereich des Heißabscheiders (20) rückgewonnenen Gase und anschließend deren Rückführung in den Heizkreislauf des Förderrohres (10) einschließt.

8. Verfahren nach Anspruch 2 oder Anspruch 7, **dadurch gekennzeichnet, daß** man während der Wärmebehandlung einen Zusatzbrenner (16) verwendet, der das Halten des Spülheißrauches, der das Förderrohr (10) von außen erwärmt, auf einer vorgegebenen Temperatur sicherstellt und die mögliche Wiederverbrennung der im Bereich des Heißabscheiders (20) rückgewonnenen Gase durchführt.

9. Verfahren nach einem der Ansprüche 1 bis 8, **dadurch gekennzeichnet, daß** man die Funktionsparameter, wie z. B. die Zufuhrmenge der festen Teilchen, die Verweilzeit der genannten Teilchen in dem Förderrohr und die Heiztemperatur außerhalb des genannten Rohres, von Fall zu Fall in Abhängigkeit von der betreffenden Art von feinteiligen Feststoffen regelt.

10. Vorrichtung (100) zum Durchführen eines Verfahrens zur Wärmebehandlung von feinteiligen Feststoffen nach mindestens einem der Ansprüche 1 bis 9, **dadurch gekennzeichnet, daß** sie umfaßt:
- einen länglichen Kasten (9) mit Doppelgehäuse,
- mindestens ein Förderrohr (10), das sich geradlinig im Inneren des länglichen Kastens (9) erstreckt und auf dichte Weise stromaufwärts mit einem Zuführtrichter (4) und stromabwärts mit einem Heißabscheider (20) verbunden ist,
- ein Mittel (8), um das oder die Förderrohre (10) in eine erzwungene Vibration zu versetzen, wobei das Mittel so angeordnet ist, daß es die festen Teilchen, die sich darin befinden, einer fortschreitenden und kontinuierlichen Bewegung in einer Richtung entlang einem Fließbett (L) unterwirft,
- ein Heizmittel (16) zum Heizen des oder der Förderrohre (10) von außen.

11. Vorrichtung nach Anspruch 10, **dadurch gekennzeichnet, daß** nur ein Heißabscheider (20) vorgesehen und dieser zumindest teilweise im Inneren des länglichen Kastens mit Doppelgehäuse (9) angeordnet ist.

12. Vorrichtung nach Anspruch 10 oder Anspruch 11, **dadurch gekennzeichnet, daß** das oder jedes Förderrohr (10) zwischen einem stromaufwärts befindlichen Deckel (6), der den länglichen Kasten (9) durchsetzt, und einem Anschluß (22) des Heißabscheiders (20) gehalten wird, wobei mindestens eine der beiden entsprechenden Verbindungen (21, 22) derart angeordnet ist, daß sie die Längenveränderungen des genannten Rohres gewährleistet.

13. Vorrichtung nach einem der Ansprüche 10 bis 12, **dadurch gekennzeichnet, daß** sie einen Versorgungskreislauf (30) zur Versorgung mit Inert- oder Reaktionsgas enthält, der an der Decke des oder jedes Förderrohres (10) angeschlossen ist.

14. Vorrichtung nach einem der Ansprüche 10 bis 13, **dadurch gekennzeichnet, daß** sie einen Zusatzbrenner (16) enthält, der so angeordnet ist, daß er eine äußere Spülung des oder jedes Förderrohres (10) durch Heißrauch und eine mögliche Wiederverbrennung der im oberen Teil des Heißabscheiders (20) rückgewonnenen Gase sicherstellt.

15. Vorrichtung nach einem der Ansprüche 10 bis 13, **dadurch gekennzeichnet, daß** sie elektrische Heizmittel enthält, die außen an dem oder an jedem Förderrohr angeordnet sind, wie z. B. ein aufgerolltes leitendes Band oder strahlende Schalen.

16. Vorrichtung nach einem der Ansprüche 10 bis 15, **dadurch gekennzeichnet, daß** das Mittel zum Versetzen in eine erzwungene Vibration aus mindestens einem Motor (8) mit Unwucht gebildet ist, dessen Drehzahlbereich einstellbar ist, damit die gewünschte Vibrationsfrequenz in einem vorgegebenen Frequenzbereich liegt, wobei die Vibrationen mittels des länglichen Kastens (9) auf das oder jedes Förderrohr (10) übertragen werden.

17. Vorrichtung nach einem der Ansprüche 10 bis 16, **dadurch gekennzeichnet, daß** das oder jedes Förderrohr (10) eine Längsachse hat, die relativ zur Horizontalen leicht geneigt ist, derart, daß das Vibrationsfließbett (L) aus festen Teilchen sich vorwärtsbewegt, indem es im Inneren des Rohres aufsteigt.
